# EUROPÄISCHE PATENTSCHRIFT

(11) **EP 1 892 228 B1**
(45) Veröffentlichungstag und Bekanntmachung des Hinweises auf die Patenterteilung: **21.01.2009**
(21) Anmeldenummer: 06015384.8
(22) Anmeldetag: 24.07.2006
(51) Int. Cl.: C04B 40/06, C04B 28/02, C04B 24/26, E01C 5/00

(54) **Verwendung von Polymerpulver in Pflasterfugenmörteln**
Use of polymer powder in jointing materials for paving stones
Utilisation de poudre polymère dans des joints en mortier pour pavés

(43) Veröffentlichungstag der Anmeldung: 27.02.2008
(73) Patentinhaber: Akzo Nobel N.V., 6824 BM Arnhem (NL)
(72) Erfinder: Ksiazek-Stadtbäumer, Siegmund, 6206 Neuenkirch (CH); Huwiler, Lukas, 6206 Neuenkirch (CH)
(74) Vertreter: Hagemann, Heinrich

(56) Entgegenhaltungen:
- DE-A1- 4 402 408
- DE-A1- 10 019 986
- DE-A1- 10 249 636
- JP-A- 2 285 103

## Beschreibung

Die vorliegende Erfindung betrifft die Verwendung von in Wasser redispergierbaren Polymerpulvern in mineralische Bindemittel enthaltenden Pflasterfugenmörteln.

Unter Pflasterfugenmörtel versteht der Fachmann einen Fugenmörtel, welcher vorwiegend im Aussenbereich zum Verfugen von u. a. Pflastersteinen, Natursteinen und Natursteinplatten, Betonsteinplatten und Betonpflastersteinen, Mosaikböden und Mosaikpflastem, Verbundsteinen, Steinplatten, Gehwegplatten, Grosssteinpflaster und Kleinpflaster, Kopfsteinpflaster, Findlingen, Holzpflaster und Holzplatten sowie Klinkerbelägen eingesetzt wird. Solche Pflaster werden beispielsweise für Fussgängerzonen, Strassen, Fusswege, Radwege, Einfahrten, Rinnsteine, Parkplätze wie auch im Gartenbau eingesetzt und vorwiegend von Gartenbauem und Strassenarbeitem in der Regel mittels der so genannten "ungebundenen Bauweise" eingebracht, welche die am häufigsten verwendete wie auch die älteste Konstruktionsweise für diese Beläge ist. Dabei werden die zu verlegenden Steine auf ein "loses" Bett aus Splitt, Sand oder Granulat gesetzt und anschliessend verfugt. Die Fugenbreite kann von wenigen Millimetern bis teilweise zu einigen Zentimetern reichen. Diese Konstruktion reagiert auf statische oder dynamische Belastung mit elastischer Verformung. Thermische Belastung wird durch ungehinderte Verformung abgebaut, es entstehen keine Spannungen. Die Pflasterdecke bleibt grundsätzlich wasserdurchlässig. Generell als nachteilig wird empfunden, dass das Fugenmaterial aus der Fuge gewaschen oder z.B. durch Kehrmaschinen abgesaugt wird. Als Folge können die Steine ihren Halt verlieren. Außerdem kann Unkraut in diesen Fugen bei geringem Verkehr wachsen, was insbesondere bei Natursteinflächen oft als störend empfunden wird.

Als Fugenmaterial wird vor allem Sand eingesetzt, welcher pulverförmig beispielsweise mit einem Besen eingetragen wird. Dieser passt sich dann problemlos den Bewegungen der Platten wie auch des Untergrundes an. Eine darauf basierende Ausführungsform wird in der EP 1 484 295 A1 beschrieben, wobei dem Sand noch ein geringer Anteil an Faserstoffen zugemischt wird. Allerdings bleiben die erwähnten Nachteile des Standes der Technik bestehen.

In der DE 44 21 970 A1 wird ein Fugenmaterial und dessen Verwendung zur Verfugung von Naturstein- oder Kunststeinbelägen beschrieben, welcher aus einem Gemisch von Quarzsand unter Zugabe von Quarzmehl und einem flüssigen Polymer-Bindemittel besteht. Letzteres setzt sich typischerweise aus einem Gemisch aus Polybutadien, Leinölfimis und isoparaffinischen Kohlenwasserstoffgemischen zusammen. Diese Gemische werden als erdfeuchte Masse in die trockenen Fugen eingekehrt, mittels einer Rüttelplatte verdichtet und anschliessend mit einem Gummischieber abgezogen. Entsprechend sind diese aufwendig in der Herstellung und Anwendung. Zudem führen diese Systeme zu geringen Festigkeiten.

Die, DE 102 49 636 A1 beschreibt einen ähnlichen Ansatz, wobei funktionalisierte, in Wasser redispergierbare Polymerpulver dem Fugensand beigemischt werden, welche im sauren oder leicht alkalischen Milieu selbstvernetzend sind. Diese sollen zur dauerhaften Verfestigung der Fugenfüllmasse führen. Die Wasserdurchlässigkeit des hergestellten Formkörpers wird durch den Einsatz der vernetzenden Polymerpulver verbessert. Wie der Fugensand und das in Wasser redispergierbare Polymerpulver mit Wasser vermischt und in die Fugen eingebracht werden, wird nicht beschrieben. Festigkeiten, wie Biegezug- und Druckfestigkeiten, werden keine angegeben. Herkömmliche, nicht vernetzende Polymerpulver können nicht eingesetzt werden. Zudem müssen die geforderten Bedingungen, wie beispielsweise der pH-Bereich, exakt eingehalten werden, um die Vernetzung zu gewährleisten.

In einem anderen Ansatz wurde, um die Dauerhaftigkeit und Festigkeiten zu erhöhen, der Sand mit etwa 20 bis 40 Gew.-% Zement und weiteren Additiven wie Cellulosefasern versetzt. Dadurch werden die Pflasterfugen dauerhafter und abwaschbar. Auch stellt sich kein Bewuchs ein. Wegen der hohen Starrheit der Fuge eignen sich solche Fugenfüllmaterialien nur für die gebundene Bauweise, bei welcher die Pflastersteine auf einen starren Untergrund, beispielsweise eine Betonplatte, verlegt werden. Solche Tragschichten unterhalb des Pflasters müssen besonders verformungsstabil mit abgestimmten Materialien hergestellt werden und bedürfen einer genauen Planung. Trotzdem treten oft Spannungen auf, die auch von Temperaturveränderungen herrühren können. Die Folge sind häufig Risse und sich lösende Fugen, wodurch sich wiederum die Steine lösen können. Aus diesem Grund werden bei der gebundenen Bauweise sehr oft zweikomponentige (2K) Fugenmörtel auf Harzbasis eingesetzt. Sie reagieren auf Belastungen nicht mehr elastisch, sondern vergleichbar mit Betonflächen "starr". Solche Systeme sind jedoch teuer, kompliziert in der Anwendung und können in der ungebundenen Bauweise nicht eingesetzt werden.

Die JP 2285103 beschreibt die Verwendung von Silica-Sand und Gummi-Pulver als Aggregate und eine Styrolacrylat-Copolymer-Dispersion und Portlandzement als Bindemittel. Das Fugenfüllmaterial wird zunächst besprüht und anschliessend die Fugen damit gefüllt. Die Oberfläche wird nachher mit einem Reinigungsmittel besprüht und mit einer Poliermaschine gereinigt. Dieses Fugenmaterial besteht vor dem Vermischen aus zwei Komponenten und muss daher zuerst gut angerührt werden, was ein zusätzlicher Aufwand bedeutet. Zudem ist der anschliessende Reinigungsprozess aufwändig in der Durchführung.

Um einen einkomponentigen mit Polymer vergüteten Mörtel herzustellen, wird auch pulverförmiger Polyvinylalkohol einem Pflasterfugentrockenmörtel mit etwa 2 bis 7 Gew.-% Zement zugesetzt. Anschliessend wird der in die Fuge gestreute Pflasterfugentrockenmörtel von aussen bewässert. Dies ergibt zwar eine einfache Handhabung. Aber weil der Polyvinylalkohol bei Wasserkontakt schnell aufquillt, kann das Wasser nicht in tiefere Schichten dringen, was einen ungenügenden Wassereintrag zur Folge hat. Zudem ergibt der Polyvinylalkohl eine schmierige Konsistenz und kann leicht Schaum bilden. Bei anhaltendem Wasserkontakt wird der Polyvinylalkohl zudem mit der Zeit ausgewaschen, was eine Versprödung der Pflasterfuge zur Folge hat.

Es stellte sich somit für die Erfindung die Aufgabe, einen einkomponentigen pulverförmigen Pflasterfugentrockenmörtel für die ungebundene Bauweise bereitzustellen, welcher einfach in der Handhabung und in der Anwendung ist, als applizierter Pflasterfugenmörtel, gegebenenfalls nach einer Aushärtungsphase, eine erhöhte Dauerhaftigkeit, eine gewisse Flexibilität wie auch ansprechende Druck- und Biegezugfestigkeiten besitzt. Zudem ist es wichtig, dass der Pflasterfugenmörtel eine gute Flankenhaftung, d.h. eine gute Haftung zum Pflasterstein, besitzt und beständig gegen mechanische Beanspruchungen ist, wie sie beispielsweise durch Kehrmaschinen, Hochdruckreiniger und/ oder Schlagregen verursacht werden. Weiter ist es wichtig, dass Verschmutzungen, verursacht durch Pflasterfugenmörtelreste auf den Pflastersteinen, gut abwaschbar sind, was eine nachfolgende Reinigung stark vereinfacht.

Diese Aufgabe konnte überraschenderweise durch die Verwendung von in Wasser redispergierbaren Polymerpulvern in Pflasterfugenmörteln gelöst werden, wobei der Pflasterfugenmörtel 0,5 bis 30 Gew.-%, bezogen auf den Pflasterfugentrockenmörtel, ein oder mehrere mineralische Bindemittel, 30 bis 99 Gew.-% ein oder mehrere Zuschlagstoffe, 0,5 bis 20 Gew.-% in Wasser redispergierbare Polymerpulver und 0 bis 25 Gew.-% weitere Komponenten enthält und der Pflasterfugentrockenmörtel pulverförmig in eine Fuge eingebracht und anschliessend Wasser zugegeben wird oder der Pflasterfugentrockenmörtel vor dem Einbringen in die Fuge mit Wasser vermischt und als pastöser Pflasterfugenmörtel in die Fuge eingebracht wird.

Das in Wasser redispergierbare Polymerpulver wird bevorzugt in Pflasterfugenmörteln eingesetzt, deren Anteil an mineralischem Bindemittel 1,0 bis 20 Gew.-%, bevorzugt etwa 1 bis 10 Gew.-% und ganz besonders bevorzugt etwa 1 bis 5 Gew.-% beträgt. Der Anteil an Zuschlagstoffen ist 50 bis 98 Gew.-%, bevorzugt etwa 60 bis 95 Gew.-% und ganz besonders bevorzugt etwa 70 bis 90 Gew.-%, derjenige an in Wasser redispergierbarem Polymerpulver ist 1,0 bis 15 Gew.-%, bevorzugt etwa 1,5 bis 10 Gew.-% und ganz besonders bevorzugt etwa 2 bis 7 Gew.-%, und derjenige an weiteren Komponenten beträgt 0 bis etwa 20 Gew.-%, jeweils bezogen auf den Pflasterfugentrockenmörtel.

Das mineralische Bindemittel besteht insbesondere aus mindestens a) einem hydraulisch abbindenden Bindemittel, insbesondere Zement, b) einem latent hydraulischen Bindemittel, insbesondere saure Hochofenschlacke, Puzzolane und/ oder Metakaolin, und/ oder c) einem nicht-hydraulischen Bindemittel, welches unter Einfluss von Luft und Wasser reagiert, insbesondere Calciumhydroxid und/ oder Calciumoxid.

Als hydraulisch abbindendes Bindemittel ist Zement, insbesondere Portlandzement, beispielsweise nach EN 196 CEM I, II, III, IV und V, Calciumsulfat in Form von α- und/oder β-Halbhydrat und/ oder Anhydrit, und/ oder Tonerdeschmelzzement bevorzugt. Als latent hydraulische Bindemittel können Puzzolane, wie Metakaolin, Calciummetasilikat und/ oder vulkanische Schlacke, vulkanischer Tuff, Trass, Flugasche, Hochofenschlacke und/ oder Silicastaub eingesetzt werden, welche zusammen mit einer Calciumquelle, wie Calciumhydroxid und/ oder Zement, hydraulisch reagieren. Als nicht-hydraulisches Bindemittel, welches unter Einfluss von Luft und Wasser reagiert, kann insbesondere Kalk, meist in der Form von Calciumhydroxid und/oder Calciumoxid, eingesetzt werden. Bevorzugt werden vor allem rein Portlandzement-basierte Systeme oder eine Mischung aus Portlandzement, Tonerdeschmelzzement und Calciumsulfat, wobei bei beiden Systemen gegebenenfalls noch latent hydraulische und/ oder nichthydraulische Bindemittel zugesetzt werden können.

Als Zuschlagstoffe, manchmal auch Füllstoffe genannt, sind beispielsweise quarzitische und/ oder carbonatische Sande und/ oder Mehle wie beispielsweise Quarzsand und/oder Kalksteinmehl, Carbonate, Silikate, Kreide, Schichtsilikate und/ oder gefällte Kieselsäuren. Des Weiteren können Leichtfüllstoffe, wie beispielsweise Mikrohohlkugeln aus Glas, Polymere wie Polystyrolkugeln, Alumosilikate, Siliziumoxid, Aluminium-Siliziumoxid, Calcium-Silikathydrat, Aluminium-Silikat, Magnesium-Silikat, Aluminium-Silikathydrat, Calcium-Aluminium-Silikat, Calcium-Silikathydrat Siliziumdioxid und/ oder Aluminium-Eisen-Magnesium-Silikat, aber auch Tone wie Bentonit verwendet werden, wobei die Füllstoffe und/ oder Leichtfüllstoffe auch eine natürliche oder künstlich erzeugte Farbe aufweisen können.

Das erfindungsgemäss einsetzbare in Wasser redispergierbare Polymerpulver enthält mindestens ein Polymer auf Basis von Vinylacetat, Ethylen-Unylacetat, Ethylen-Vinylacetat-Vinylversatat, Ethylen-Vinylacetat-Vinylchlorid, Ethylen-Vinylchlorid, Vinylacetat-Vinylversatat, (Meth-)Acrylat, Ethylen-Vinylacetat-(Meth-)Acrylat, Vinylacetat-Vinylversatat-(Meth-)Acrylat, Vinylacetat-Maleinsäure und Vinylacetat-Maleinsäureester, Vinylacetat-Vinylversatat-Maleinsäure und Vinylacetat-Vinylversatat-Maleinsäureester, Vinylacetat-(Meth-)Acrylat-Maleinsäure und Vinylacetat-(Meth-)Acrylat-Maleinsäureester, Styrol-Acrylat und/ oder Styrol-Butadien, wobei Vinylversatat ein C₄- bis C₁₂- Vinylester ist, und die Polymerisate etwa 0 - 50 Gew.-%, insbesondere etwa 0 - 30 Gew.-% und ganz besonders bevorzugt etwa 0 - 10 Gew.-% an weiteren Monomeren, insbesondere solche mit funktionellen Gruppen, enthalten können.

Das erfindungsgemäss einsetzbare in Wasser redispergierbare Polymerpulver ist auf Basis eines oder mehrerer Polymerisate, welche bevorzugt mittels Emulsionspolymerisation, Suspensionspolymerisation, Mikroemulsionspolymerisation und/ oder inverser Emulsionspolymerisation hergestellt werden, wobei die Polymerisate gegebenenfalls auch eine heterogene Morphologie aufweisen können, welche durch die Wahl der Monomere und des Herstellverfahrens erhalten werden kann. Die anschliessende Trocknung erfolgt bevorzugt mittels Sprühtrocknung, Gefriertrocknung, Fliessbetttrocknung, Walzentrocknung und/ oder Schnelltrocknung. Emulsionspolymerisation und Sprühtrocknung sind besonders bevorzugt,

Geeignete Monomerklassen zur Herstellung dieser Polymerisate sind zum Beispiel lineare oder verzweigte C₁- bis C₂₀- Vinylester, Ethylen, Propylen, Vinylchlorid, (Meth-) Acrylsäure und deren lineare oder verzweigte C₁- bis C₂₀- Alkylester, (Meth-)Acrylamid und (Meth-)Acrylamid mit N-substituierten linearen oder verzweigten C₁- bis C₂₀-Alkylgruppen, Acrylnitril, Styrol, Styrol-Derivate und/ oder Diene wie beispielsweise 1,3-Butadien: Bevorzugte Vinylester sind lineare oder verzweigte C₁- bis C₁₂- Vinylester, wie beispielsweise Vinylacetat, Vinylstearat, Vinylformiat, Vinylpropionat, Vinylbutyrat, Vinylpivalat, Vinyllaurat, Vinyl-2-ethylhexanoat, 1-Methylvinylacetat und/ oder C₉-, C₁₀- und/ oder C₁₁- Vinylversatat, Vinylpyrrolidon, N-Vinylformamid, N-Vinylacetamid sowie Vinylester der Benzoesäure und p-tert-Butylbenzoesäure, wobei insbesondere Vinylacetat, Vinyllaurat und/ oder Vinylversatat bevorzugt sind. Bevorzugte C₁- bis C₁₂-Alkylgruppen der (Meth-)Acrylsäureester und N-substituierten (Meth-)Acrylamide sind Methyl-, Ethyl-, Propyl-, n-Butyl-, i-Butyl-, t-Butyl-, Hexyl-, Cyclohexyl-, 2-Ethylhexyl-, Lauryl-, Stearyl-, Norbornyl-, Polyalkylenoxid- und/ oder Polyalkylenglykolgruppen, insbesondere Methyl-, Butyl-, 2-Ethylhexylgruppen. Insbesondere sind Methylmethacrylat, n-Butylacrylat, t-Butylmethacrylat und 2-Ethylhexylmethacrylat bevorzugt.

Zudem können weitere Monomere, insbesondere Monomere mit funktionellen Gruppen einpolymerisiert werden. Beispielsweise können Maleinsäureanhydrid, ungesättigte Dicarbonsäuren und deren verzweigte oder lineare C₁- bis C₂₀- Ester, insbesondere Itaconsäure, Maleinsäure und/ oder Fumarsäure sowie deren Ester, mehrfach ethylenisch ungesättigte Comonomere wie beispielsweise Divinyladipat, Diallylmaleat, Allylmethacrylat oder Triallylcyanurat, Divinylbenzol, Butandiol-1,4-dimethacrylat, Triethylenglykoldimethacrylat, Hexandioldiacrylat, funktionelle Vinyl- und/ oder (Meth-) Acrylat Monomere enthaltend Alkoxysilan-, Glycidyl-, Epihalohydrin-, Carboxyl-, Amin-, Hydroxyl- Ammonium- und/ oder Sulfonsäuregruppen copolymerisiert werden. Bevorzugte funktionelle Monomere sind Hydroxypropyl(meth-)acrylat, N-Methylolallylcarbamat, Methylacrylamidoglykolsäuremethylester, N-Methytol(meth-)acrylamid, Vinylsulfonsäure, Acrylamidoglykolsäure, Glycidyl(meth-)acrylat, 2-Acrylamido-2-methylpropansulfonsäure, (Meth-)acryloxypropyltri(alkoxy)silan, Vinyltrialkoxysilan, Vinylmethyldialkoxysilane, wobei als Alkoxygruppen bevorzugt Methoxy-, Ethoxy- und/ oder iso-Propoxygruppen verwendet werden, Acetylacetoxyethyl(meth-)acrylat, Diacetonacrylamid, Acrylamidoglycolsäure, Methylacrylamidoglykolsäuremethylester, Alkylether, N-Methylol(meth-)acrylamid, N-Methylolallylcarbamat, Ester des N-Methylol(meth-) acrylamids und des N-Methylolallylcarbamats, N-[3-(Dimethylamino)propyl]methacrylamid, N-[3-(Dimethylamino)ethyl]methacrylat, N-[3-(Trimethylammonium)propyl] methacrylamidchlorid und/ oder N,N-[3-Chloro-2-hydroxypropyl)-3-dimethylammonium-propyl](meth-)acrylamid-chiorid. Der Anteil dieser Comonomere beträgt, bezogen auf den Gesamtmonomeranteil, bevorzugt etwa 0 bis 30 Gew.-%. insbesondere etwa 0 bis 20 Gew.-% und ganz besonders bevorzugt etwa 0,1 bis 10 Gew.-%, wobei insbesondere darauf geachtet werden sollte, dass der Anteil an freien Carboxylgruppen bevorzugt nicht höher als etwa 10 Gew.-%, insbesondere nicht höher als etwa 5 Gew.-% und ganz besonders bevorzugt nicht höher als etwa 3 Gew.% ist.

Die Wahl des zur Polymerisation notwendigen Initiatorsystems unterliegt keinerlei wesentlichen Einschränkungen. So können alle bekannten Initiatorsysteme verwendet werden.

Zur vorteilhaften Ausführung der Erfindung ist es bevorzugt, dass die Glasübergangstemperatur T_{g} des Emulsionspolymerisates innerhalb von etwa -60°C bis 80°C, insbesondere etwa -30°C bis 50°C und ganz besonders bevorzugt etwa -20°C bis 40°C liegt.

Aus den eingesetzten Monomeren lässt sich jeweils die Glasübergangstemperatur T_{g} der hergestellten Copolymerisate und somit der Emulsionspolymerisate sowohl empirisch berechnen wie auch experimentell bestimmen. Anhand der bekannten Fox Gleichung (T.G. Fox, Bull. Am. Phy. Soc. (serll) 1, 123 (1956) und Ullmann's Enzyklopädie der Technischen Chemie, Bd. 19, 4. Auflage, Verlag Chemie, Weinheim, 1980, S. 17/18) können sie empirisch berechnet werden: 1/ T_{g} = x_{A}/ Tg_{A} + x_{B}/ Tg_{B} + ..... + xₙ/ T_{gn}, wobei x_{A}, x_{B} .... die Massenbrüche der eingesetzten Monomere A, B, ... (in Gew.-%) und T_{gA}, Tg_{B}, .... die Glasübergangstemperaturen T_{g} in Kelvin der jeweiligen Homopolymerisate von A, B, ... sind. Diese sind beispielsweise in Ullmann's Encyclopedia of Industrial Chemistry, VCH, Weinheim, Vol. A21 (1992), S. 169 aufgelistet. Eine andere Möglichkeit, die Glasübergangstemperaturen T_{g} der Copolymerisate zu bestimmen, ist die experimentelle Bestimmung, beispielsweise mittels DSC, wobei die Mitteltemperatur herangezogen werden soll (midpoint temperature gemäss ASTM D3418-82).

Es ist bevorzugt, wenn die hergestellten Emulsionspolymerisate, Suspensionspolymerisate, Microemulsionspolymerisate und/ oder inverse Emulsionspolymerisate mit einer oder mehreren höhermolekularen Verbindungen stabilisiert sind, insbesondere mit einem oder mehreren Schutzkolloiden. Die Einsatzmenge dieser Stabilisierungssysteme beträgt, bezogen auf den eingesetzten Monomeranteil, etwa 1 bis 30 Gew.-%, insbesondere etwa 3 bis 15 Gew.-%.

Typische wasserlösliche organische polymere Schutzkolloide sind bevorzugt höhermolekulare Verbindungen. Darunter fallen natürliche Verbindungen wie Polysaccharide, welche gegebenenfalls chemisch modifiziert sind, synthetische höhermolekulare Oligomere sowie Polymerisate, die nicht oder nur schwach ionischen Charakter haben, und/ oder Polymerisate, welche mittels Monomeren, die zumindest zum Teil ionischen Charakter haben, und beispielsweise mittels radikalischer Polymerisation in wässrigem Medium in-situ hergestellt werden. Es ist auch möglich, dass nur ein Stabilisierungssystem verwendet wird oder verschiedene Stabilisierungssyteme miteinander kombiniert werden.

Bevorzugt einsetzbare Polysaccharide und deren Derivate sind kaltwasserlösliche Polysaccharide und Polysaccharidether, wie Celluloseether, Stärkeether (Amylose und/oder Amylopectin und/ oder deren Derivate), Guarether und/ oder Dextrine. Es können auch synthetische Polysaccharide wie anionische, nonionische oder kationische Heteropolysaccharide, insbesondere Xanthan Gum oder Wellan Gum verwendet werden. Die Polysaccharide können, müssen aber nicht, chemisch modifiziert sein, beispielsweise mit Carboxymethyl-, Carboxyethyl-, Hydroxyethyl-, Hydroxypropyl-, Methyl-, Ethyl-, Propyl- und/ oder langkettigen Alkylgruppen. Weitere natürliche Stabilisierungssysteme sind Alginate, Peptide und/ oder Proteine wie beispielsweise Gelatine, Casein und/ oder Soja-Protein. Ganz besonders bevorzugt sind Dextrine, Starke. Stärkeether, Casein, Soja-Protein, Hydroxyalkyl-Cellulose und/ oder AlkylHydroxyalkyl-Cellulose.

Synthetische Stabilisierungssysteme sind beispielsweise ein oder mehrere Polyvinylpyrrolidone und/ oder Polyvinylacetale mit Molekulargewichten von 2000 bis 400'000, voll- oder teilverseifte und/ oder modifizierte voll- oder teilverseifte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 50 mPas, insbesondere von etwa 3 bis 40 mPas (gemessen bei 20°C nach DIN 53015), sowie Melaminformaldehydsulfonate, Naphthalinformaldehydsulfonate, Blockcopolymerisate von Propylenoxid und Ethylenoxid, Styrol-Maleinsäure- und/ oder Vinylether-Maleinsäure-Copolymerisate. Höhermolekulare Oligomere können nichtionische, anionische, kationische und/ oder amphotere Emulgatoren sein, wie beispielsweise Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen, sowie Ester von Sulfobernsteinsäure, quartemäre Alkylammonium-Salze, quartemäre Alkylphosphonium-Salze, Polyadditionsprodukte wie Polyalkoxylate, beispielsweise Addukte von 5 bis 50 Mol Ethylenoxid und/ oder Propylenoxid pro Mol an lineare und/oder verzweigte C₆- bis C₂₂-Alkanole, Alkylphenole, höhere Fettsäuren, höhere Fettsäureamine, primäre und/ oder sekundäre höhere Alkyl-Amine, wobei die Alkylgruppe jeweils bevorzugt eine lineare und/ oder verzweigte C₆- bis C₂₂-Alkylgruppe ist. Ganz besonders bevorzugt sind synthetische Stabilisierungssysteme, insbesondere teilverseifte, gegebenenfalls modifizierte, Polyvinylalkohole, wobei ein oder mehrere Polyvinylalkohole zusammen eingesetzt werden können, gegebenenfalls mit geringen Mengen von geeigneten Emulgatoren. Bevorzugte synthetische Stabilisierungssysteme sind insbesondere modifizierte und/ oder unmodifizierte Polyvinylalkohole mit einem Hydrolysegrad von 80 bis 98 Mol-% und einer Höpplerviskosität als 4%ige wässrige Lösung von 1 bis 50 mPas und/ oder Polyvinylpyrrolidon.

Nach einer speziellen Ausführungsform wird ein ionischen Polymerisat als Stabilisierungssystem eingesetzt, welches über radikalische (Co-)Polymerisation von olefinischen Monomeren in Wasser erhalten wird, wobei zumindest ein Teil der olefinischen Monomeren eine ionische Gruppe enthält. Solche Systeme werden typischerweise in-situ erhalten, wobei als Monomere mit einer ionischen Gruppe beispielsweise (Meth-)acrylsäure, Monomere mit Sulfonsäuregruppen und/ oder kationische Monomere eingesetzt werden können, wie zum Beispiel in EP-A 1098916 und EP-A 1109838 beschrieben.

Des Weiteren können auch carboxylgruppenhaltige Polymere auf Basis von Mono- und/oder Dicarbonsäuren oder deren Anhydride, wie beispielsweise Polyacrylsäuren, als Stabilisierungssysteme eingesetzt werden. Allerdings ist darauf zu achten, dass die Menge eines solchen Stabilisierungssystems und/ oder der eingesetzten Menge an in Wasser redispergierbarem Polymerpulver nicht zu gross gewählt wird, um die Hydratation des mineralischen Bindemittels sowie dessen Verarbeitung nicht zu stark negativ zu beeinflussen.

Den erfindungsgemäss einsetzbaren in Wasser redispergierbaren Polymerpulvern kann ein Filmbildehilfsmittel und/ oder ein Koalesziermittel zugegeben werden, wobei der Anteil bevorzugt etwa 0 bis 5 Gew.-%, insbesondere etwa 0 bis 2 Gew.-%, bezogen auf den Copolymerisatgehalt, beträgt.

Sehr vorteilhaft sind in Wasser redispergierbare Polymerpulver mit einem niedrigen Anteil an organischen flüchtigen Komponenten (VOC), wobei als solche gelten, welche einen Siedepunkt von weniger als 250°C bei Normaldruck besitzen. Dazu gehören beispielsweise nicht reagierte Monomere und nicht polymerisierbare in den Monomeren enthaltene Verunreinigungen und Nebenprodukte der Polymerisation. Der VOC-Gehalt in den in Wasser redispergierbaren Polymerpulvern beträgt zweckmässigerweise weniger als etwa 5000 ppm, bevorzugt weniger als etwa 2000 ppm, insbesondere weniger als etwa 1000 ppm und ganz besonders bevorzugt weniger als etwa 500 ppm, bezogen auf den Polymerisatgehalt.

Es können auch weitere Komponenten, wie Additive, zu den in Wasser redispergierbaren Polymerpulver gegeben werden, wobei die Zugabe vor, während und/ oder nach der Trocknung erfolgen kann. Prinzipiell sind der Art der Komponenten keine wesentlichen Grenzen gesetzt. Flüssige Komponenten werden bevorzugt vor oder während der Trocknung zugegeben, können aber auch nachträglich auf das Pulver gesprüht werden. Pulverförmige Komponenten werden bevorzugt während oder nach der Sprühtrocknung zugegeben können aber auch der Dispersionsmischung vor dem Trocknungsschritt zugegeben werden.

Eine spezielle Ausführungsform ist die Zugabe mindestens einer weiteren organischen Komponente mit funktionellen Gruppen. Diese kann Teil des in Wasser redispergierbaren Polymerpulvers sein und/ oder als separate Komponente dem Pflasterfugentrockenmörtel beigemischt werden. Ist diese Komponente flüssig, wird sie bevorzugt dem in Wasser redispergierbaren Polymerpulver während dessen Herstellung zugegeben oder in pulverförmige Form überführt. Ist sie pulverförmig, kann sie entweder dem in Wasser redispergierbaren Polymerpulver und/ oder dem Pflasterfugentrockenmörtel zugemischt werden. Die organische Komponente mit funktionellen Gruppen reagiert bevorzugt in alkalischem Medium entweder mit sich selbst und/ oder einer anderen Verbindung. Beispiele solcher Verbindungen sind Vernetzer, wie Epoxide, Epoxydharze, Oligo- und/ oder Polyamine, bifunktionelle maskierte Aldehyde mit wenigsten 3 Kohlenstoffatomen, Silane, Siloxane, Isocyanate, welche gegebenenfalls zusammen mit Hydroxyverbindungen, wie Polyolen, eingesetzt werden können, Borsäure und/ oder Borax und/ oder Verbindungen mit Carbodiimid-, Carboxyl- und/ oder Epichlorhydringruppen.

Bevorzugte funktionelle Gruppen dieser organischen Komponente wie auch der (co-) polymerisierbaren Monomeren mit funktionellen Gruppen sind Silan-, insbesondere Alkoxysilan-, Glycidyl-, Epihalohydrin-, N-Methylol-, Carboxyl-, Amin-, Hydroxyl-, Ammonium-, Keton-, Säureanhydrid-, Acetoacetonat-, Sulfonsäure-, Amid-, Amidin-, Imin-, Ester-, Carboxyl-, Carbonyl-, Aldehyd-, Sulfat-, Sulfonat- und/ oder Thiolgruppen, wobei Silan-, Epoxy-, Epihalohydrin- und/ oder Amingruppen ganz besonders bevorzugt sind.

Der Pflasterfugenmörtel kann zudem noch weitere Komponenten in den üblichen Mengen enthalten. Es ist von Vorteil, wenn sie in Pulverform vorliegen. Sind sie von Natur aus flüssig, können sie auf eine Matrix adsorbiert oder in eine Matrix eingebettet werden, um sie pulverförmig handhaben zu können. Der Art dieser weiteren Komponenten sind keine wesentlichen Grenzen gesetzt. Nicht limitierende Beispiele solcher weiterer Komponenten sind Farbpigmente, Cellulosefasern, wasserlösliche Polymere, insbesondere voll- und/ oder teilverseifte und gegebenenfalls modifizierte Polyvinylalkohole, Polyvinylpyrrolidone, Polyalkylenoxide und Polyalkylenglykole, wobei die Alkylengruppe typischerweise eine C₂- und/ oder C₃- Gruppe ist, wozu auch Blockcopolymerisate zählen, Verdickungsmittel, Wasserretentionsmittel, Alkyl-, Hydroxyalkyl- und/ oder Alkylhydroxyalkyl-Polysaccharidether wie Celluloseether, Stärkeether und/ oder Guarether, wobei die Alkyl- und Hydroxyalkylgruppe typischerweise eine C₁- bis C₄- Gruppe ist, synthetische Polysaccharide, wie anionische, nonionische oder kationische Heteropolysaccharide, insbesondere Xanthan Gum oder Wellan Gum, Netzmittel, Dispergiermittel, Zementverflüssiger, Polycarboxylate, Polycarboxylatether, Polyacrylamide, Hydrophobierungsmittel wie Silane, Silanester, Siloxane, Silicone, Fettsäuren und/ oder Fettsäureester, Luftporenbildner, Gummi-Pulver, Biozide, Herbizide, Fungizide, Entschäumer, Duftstoffe zum Fernhalten von Tieren, Additive zur Reduktion der Sedimentation, des Ausschwimmens und/ oder von Ausblühungen, wie beispielsweise Verbindungen auf Basis von Naturharzen, insbesondere Kolophonium und/ oder dessen Derivate, Abbinde- und Erstarrungsbeschleuniger, Abbindeverzögerer und/ oder Pulver, welche mit Wasser alkalisch reagieren, wie beispielsweise Oxide und/ oder Hydroxide von Alkali- und/ oder Erdalkalisalzen, wie beispielsweise Calciumhydroxid, Calciumoxid, Natrium- und/ oder Kaliumhydroxid und/ oder Aluminiumhydroxid.

Als Silane, Silanester, Silikone und/ oder Siloxane können grundsätzlich alle Organosiliciumverbindungen eingesetzt werden. Es ist jedoch von Vorteil, jedoch nicht zwingend, wenn der Siedepunkt bei Normaldruck der eingesetzten Organosiliciumverbindung nicht zu niedrig ist, bevorzugt etwa 100 °C oder mehr. Die Organosiliciumverbindungen können in Wasser löslich, unlöslich oder nur teilweise löslich sein. Bevorzugt sind dabei Verbindungen welche keine oder nur eine limitierte Wasserlöslichkeit besitzen. Dies können sein Kieselsäureester mit der Formel Si(OR')₄, Organoxysilane der Formel Siₙ(OR')₄₋ₙ mit n = 1 bis 3, Polysilane der Formel R₃Si(SiR₂)ₙSiR₃ mit n = 0 bis 500, wobei n = 0 bis 8 bevorzugt ist, Di-, Oligo- und Polysiloxane aus Einheiten der allgemeinen Formel R_{c}H_{d}Si(OR')ₑ(OH)_{f}O_{(4-c-d-e-f)/2} mit c = 0 bis 3, d = 0 bis 2, e = 0 bis 3, f = 0 bis 3 und die Summe c+d+e+f je Einheit höchstens 3,5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloakylreste mit 3 bis 10 C-Atomen, Alkylenreste mit 2 bis 4 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether-, Ester-, Amid-, Nitril-, Hydroxyl, Amin-, Carboxyl-, Sulfonsäure-, Carbonsäureanhydrid- und Carbonylgruppen substituiert sein können, wobei im Falle der Polysilane R auch die Bedeutung OR' haben kann.

Ganz speziell bevorzugte weitere Komponenten sind Polysaccharidether, insbesondere Cellulose- und/ oder Stärkeether, Hydrophobierungsmittel wie Silane, Silanester, Fettsäuren und/ oder Fettsäureester, Mittel zur Reduktion von Ausblühungen, insbesondere auf Basis von Naturharzen, Cellulosefasern, Entschäumer und/ oder Pigmente.

Der Anteil der weiteren Komponenten kann, bezogen auf die Pflasterfugentrockenmörtel, beispielsweise für grenzflächenaktive Substanzen sehr klein sein und im Rahmen von etwa 0,01 Gew.% oder mehr, insbesondere etwa 0,1 Gew.-% und mehr liegen, soll jedoch in der Regel etwa 2 Gew.-%, insbesondere etwa 1 Gew.-% nicht übersteigen. Andererseits kann der Anteil an zugemischten Pigmenten höher sein, soll jedoch nicht mehr als etwa 25 Gew.-%, bevorzugt nicht mehr als etwa 20 Gew.-% und insbesondere nicht mehr als etwa 15 Gew.-% betragen. Der Anteil an Hydrophobierungsmitteln beträgt etwa 0,05 bis etwa 3 Gew.-%, bevorzugt etwa 0,1 bis etwa 2 Gew.-% und insbesondere etwa 0,2 bis etwa 1 Gew.-%. Der Gehalt der anderen Komponenten liegt zwischen etwa 1 Gew.-% und etwa 15 Gew.-%, bevorzugt zwischen etwa 2 und etwa 10 Gew.-%, bezogen auf die Pflasterfugentrockenmörtel.

In der Regel ist es für den Anwender ein grosser Vorteil, wenn der Pflasterfugenmörtel als Pflasterfugentrockenmörtel in die leeren Fugen gestreut oder mit einem Besen hinein gewischt wird und das Wasser anschliessend beispielsweise über die Oberfläche zugegeben wird. Es wurde nun überraschenderweise gefunden, dass eine solche Wasserzugabe über die Oberfläche, ohne anschliessendes Durchmischen des Mörtels, genügt, um die in Wasser redispergierbaren Polymerpulver in dieser kompakten Umbebung sowohl zu redispergieren als auch in der Matrix zu verteilen. Bei der Erhärtung und Austrocknung des Pflasterfugenmörtels bildet sich dann ein wasserunlöslicher Film. Dieser erhöht somit die Kohäsion des abgebundenen Pflasterfugenmörtels.

Für den Wassereintrag über die Oberfläche eignen sich vor allem Methoden, bei denen der eingestreute oder eingefegte Pflasterfugentrockenmörtel nicht beschädigt wird. So wird ein sanfter Eintrag des Wassers in Form eines Sprühnebels und/ oder einer Oberflächenbewässerung bevorzugt. Der Art und Weise des Wassereintrages sind keine Grenzen gesetzt, solange sie den eingetragenen Pflasterfugenmörtel nicht beschädigen. Dies kann beispielsweise mit einem Rasensprenger, einem Wassersprengers, einem Gartenschlauch mit oder ohne Verteilerdüse und/ oder einer Giesskanne erfolgen. Es ist von Vorteil, dass die Dauer der Bewässerung so gewählt wird, dass das Wasser möglichst durch den ganzen Pflasterfugentrockenmörtel dringen kann, so dass der Mörtel bis in den Untergrund genügend Wasser zur Hydratation hat. Wird zuviel Wasser zugegeben, versickert das überschüssige Wasser in dem Untergrund, was in der Regel keine negativen Folgen hat. Falls zuwenig Wasser zugegeben wird, wird nur der obere Teil des Pflasterfugenmörtels hydratisiert. Bei späterer Bewässerung, sei es künstlich oder durch Regen oder Tau, kann dann weiteres Wasser durch den oberflächlich abgebundenen Mörtel diffundieren und in tiefere Schichten vordringen. Es ist jedoch auch möglich, dass Wasser durch den Untergrund in den Pflasterfugentrockenmörtel gelangen kann und somit eine Hydratation bewirken kann.

Nach einer weiteren Ausführungsform wird der Pflasterfugentrockenmörtel zuerst mit Wasser angerührt und als angerührter Mörtel in die Fugen gegeben. Bei dieser Variante ist es jedoch hilfreich, wenn die Wassermenge eingestellt wird, so dass der angerührte Mörtel eine schön zu verarbeitende Konsistenz erhält, um gut in die Fugen eingebracht zu werden, ohne davon zu fliessen.

Der Pflasterfugenmörtel, enthaltend das erfindungsgemäss einsetzbare in Wasser redispergierbare Polymerpulver, zeigt typischerweise eine sehr gute Benetzbarkeit. Es wurde überraschenderweise gefunden, dass das in Wasser redispergierbare Polymerpulver auch ohne zusätzliche Scherkräfte und Mischvorgänge sich spontan redispergiert und anschliessend einen wasserunlöslichen Film bildet. So werden mit in Wasser redispergierbaren Polymerpulvern bei den physikalischen Werten der abgebundenen Pflasterfugenmörteln keine, oder gegebenenfalls nur unwesentliche, Nachteile gegenüber Emulgator-stabilisierten Dispersionen erhalten, obwohl diese Systeme zuvor gut durchmischt werden, um eine entsprechende Homogenität des Mörtels zu gewährleisten. Trotzdem sind die Endeigenschaften des Pflasterfugenmörtels durchaus vergleichbar, trotz viel einfacherem Eintrag und Verarbeitung.

Die Erfindung wird anhand der nachfolgenden Beispiele noch näher erläutert.

### Beispiel 1: Herstellung und Bewässerung von eingestreuten Pflasterfugentrockenmörteln mittels Sprühnebel.

Um das Einstreuen und die Bewässerung von Fugen unter möglichst gut definierten Bedingungen zu untersuchen, wurden Mörtel-Prismen hergestellt. Anhand dieser konnten anschliessend auch physikalische Werte, wie Biegezug- und Druckfestigkeiten, bestimmt werden.

Zur Herstellung eines Pflasterfugentrockenmörtels wurden 5 Gew.-% Portlandzement CEM I 42,5 N, 87 Gew.-% eines Quarzsandes mit der Sieblinie 0,063 bis 1,5 mm, 3 Gew.-% eines Calciumcarbonates (Durcal 10) und 5 Gew.-% eines in Wasser redispergierbaren Polymerpulvers mit einem Rührwerk homogen gemischt. Ein Vergleichsbeispiel wurde mit der gleichen Menge eines teilverseiften Polyvinylalkohols mit einem Hydrolysegrad von 88 Mol-% und einer Höpplerviskosität als 4%ige wässrige Lösung von 4 mPas (gemessen bei 20°C nach DIN 53015) durchgeführt (in den nachfolgenden Tabellen mit "PVOH" gekennzeichnet). Ein anderes Vergleichsbeispiel wurde ganz ohne Polymerpulver durchgeführt, wobei die weggelassene Polymermenge durch Quarzsand kompensiert wurde.

Anschliessend wurden je 500 g des hergestellten Trockenmörtels in eine Prismenform aus Metall der Grösse 4 cm x 4 cm x 16 cm eingestreut, wobei die Innenwand der Prismenform zuvor mit Schalöl als Trennmittel mit einem Pinsel eingestrichen wurde. Durch manuelles Rütteln und Klopfen während 10 Sekunden wurde die Trockenformulierung verdichtet. Die Oberfläche des eingestreuten Trockenmörtels wurde danach mit einer Kelle glatt abgezogen.

Bewässert wurde mit einer Sprühflasche, welche üblicherweise zum Besprühen von Pflanzen verwendet wird. Der beim Besprühen entstehende Wasserkegel wurde so eingestellt, dass aus einer Distanz von 10 cm das Wasser selektiv auf die Mörteloberfläche gesprüht wurde. Die Spühdauer betrug zwischen 5 und 10 Minuten, je nachdem wie gut die Oberfläche benetzt wurde und das Wasser eindringen konnte. Die notwendige Wassermenge wurde in einem separaten Versuch zuvor ermittelt, wobei periodisch mit einem feinen Spachtel die Oberfläche beschädigt und die Eindringtiefe des Wassers optisch beurteilt wurde, bis das Wasser auch die unterste Pflasterfugenmörtelschicht erreicht hat.

Während des Bewässerns wurden folgende Beurteilungen vorgenommen: a) die Benetzung der Oberfläche, d.h. wie gut wird das Wasser von der Fuge während des ganzen Bewässerungsvorgangs aufgenommen, b) die Wassersättigung, d.h. wie viel Wasser kann ohne Pause auf das Prisma gesprüht werden, bis Wasser an der Oberfläche aufschwimmt, c) die Blasenbildung, d.h. ob während oder unmittelbar nach dem Aufsprühen des Wassers Blasen an die Oberfläche aufsteigen, was einen negativen Einfluss auf die Oberflächenbeschaffenheit haben kann, und d) die Reinigung nach Verschmutzung, d.h. wie einfach konnte die Prismenform nach dem Ausschalen der Prismen gereinigt werden. Dies gibt eine gute Indikation, wie sich der bewässerte Pflasterfugenmörtel auf der Oberfläche der Pflastersteine verhält.

18 Std. nach Ende des Wassereintrags wurden die Prismen ausgeschalt und bei 23°C und 50% relativer Luftfeuchtigkeit (Normklima) gelagert.

**Tabelle 1: Aufgesprühte Wassermengen der verschiedenen Pflasterfugenmörtel, enthaltend die in Wasser redispergierbaren Polymerpulver EVA-1, EVA-2 und St/Ac und die Vergleichsproben PVOH und ohne Polymerpulver, sowie die Beurteilung der verschiedenen Pflastersteinfugen während des Bewässerns ^{a}).**

| | **EVA-1** | **EVA-2** | **St/Ac** | **PVOH^{c)}** | **Ohne P.P.**^{d)} |
|---|---|---|---|---|---|
| Wassermenge [Gew.-%] | 9 | 9 | 9 | 12 | 9 |
| Wassersättigung [Gew.-%] | 7 | 7 | 5 | 6 | Keine |
| Benetzung der Oberfläche | Sehr gut | Sehr gut | Mittel -gut | Sehr gut | Sehr gut |
| Besprühdauer [Min] | 5 | 5 | 10 | 8 | 5 |
| Blasenbildung | Keine | Keine | Keine | Stark | Keine |
| Reinigung nach Verschmutzung ^{b)} | Sehr gut | Sehr gut | Sehr gut | Schmierig | Sehr gut |

| | | | | | |
|---|---|---|---|---|---|
| a) Die in Wasser redispergierbaren Polymerpulver EVA-1, EVA-2 und St/Ac sind verschiedene sprühgetrocknete, mit Polyvinylalkohol stabilisierte Dispersionen auf Basis von Ethylen-Vinylacetat (EVA-1 und EVA-2) resp. Styrol-Acrylat Copolymeren (St/ Ac). b) "Sehr gut" bedeutet, dass die Reinigung keinerlei Probleme ergab und die Rückstände gut abwaschbar waren. "Schmierig" bedeutet, dass die zurückbleibende Schicht erst nach intensivem Reinigen entfernt werden konnte. c) PVOH steht für teilhydrolysierten Polyvinylalkohol, siehe Text. d) P.P. steht für "Polymer Pulver" | | | | | |

**Tabelle 2: Mehrmaliges Bewässern des Pflasterfugenmörtels in der Prismenform mit zeitlichen Abständen von einer Stunde. Je Zusammensetzung wurden jeweils vier Prismen gemacht, wobei nach jedem Bewässerungszyklus eines auf die Seite gestellt wurde, um nach 18 Std. auszuschalen und zu beurteilen. Der unten angegebene Prozentsatz gibt den Anteil des Prismas an, welcher eine kompakte Einheit bildet und nicht zerfiel. Zudem wurde die Oberfläche des letzten Prismas nach einer Lagerdauer von 4 Tagen auf deren Oberflächenhärte und Oberflächenhydrophobie beurteilt.**

| | **Wasser Menge ^{d)}** | **EVA-1** | **St/Ac** | **PVOH ^{c)}** | **Ohne P.P.^{d)}** |
|---|---|---|---|---|---|
| 1. Bewässern | 3 | 60% | 60% | 20% | 95% |
| 2. Bewässern | 6 | 95% | 70% | 70% | 100% |
| 3. Bewässern | 9 | 100% | 100% | 75% | 100% |
| 4. Bewässern | 12 | 100% | 100% | 90% | 100% |
| Oberflächenhärte ^{a)} | | Hart | Mittel | Hart | Weich |
| Oberflächenhydrophobie ^{f)} | | 5 min | 30 sec | 30 sec | 0 sec |

| | | | | | |
|---|---|---|---|---|---|
| d) Angegeben in Gew.-%. e) Die Oberflächenhärte wurde mit einem spitzen Metallstab durch Kratzen beurteilt. f) Zur Beurteilung der Oberflächenhydrophobie wurden je 1 ml Wasser mit einer Pipette auf die Oberläche getropft und die Zeit gemessen, bis alles Wasser vom Untergrund aufgesogen wurde. | | | | | |

Aus den Tabellen 1 und 2 geht unter anderem hervor, dass der Pflasterfugenmörtel mit teilhydrolysiertem Polyvinylalkohol den höchsten Wasserbedarf zeigt. Im Gegensatz zu den anderen Pflasterfugenmörteln mit in Wasser redispergierbaren Polymerpulvern (EVA-1, EVA-2 und St/Ac) und ohne Polymerpulver absorbiert der Pflasterfugenmörtel mit Polyvinylalkohol an der Oberfläche relativ viel Wasser, welches dann die unterliegenden Schichten nicht erreichen kann. Somit bindet das mineralische Bindemittel nicht ab und das organische Bindemittel verfilmt nicht. Die Folge davon sind mangeinde Festigkeiten dieser Schichten.
Auch wenn die Benetzung des Trockenmörtels sehr gut ist, kann der abgebundene Pflasterfugenmörtel eine moderate Hydrophobie aufweisen, wie dies am Beispiel von EVA-1 gezeigt wird. Dies hilft, dass weniger Schmutz in die Fugen gelangt und dieser, insbesondere bei Gefälle und/ oder stärkerem Regen, weggewaschen wird.

**Tabelle 3: Biegezugfestigkeiten in Anlehnung an EN13892-2 der erhaltenen Mörtelprismen nach verschiedenen Lagerdauern, in N/mm².**

| **Lagerdauer in Normklima** | **EVA-1** | **EVA-2** | **St/Ac** | **PVOH** | **Ohne P.P.^{d)}** |
|---|---|---|---|---|---|
| 1d | 0,07 | 0,06 | 0,04 | 0,22 | 0,18 |
| 3 d | 0,56 | 0,43 | 0,51 | 0,97 | 0,35 |
| 7 d | 1,67 | 0,99 | 1,50 | 1,80 | 0,50 |
| 14 d | 2,07 | 1,05 | 1,69 | - ^{g)} | 0,45 |
| 28 d | 2,19 | 0,99 | 1,57 | - ^{g)} | 0,40 |

| | | | | | |
|---|---|---|---|---|---|
| g) Es sind keine Werte verfügbar. | | | | | |

**Tabelle 4: Druckfestigkeit in Anlehnung an EN13892-2 der erhaltenen Mörtelprismen nach verschiedenen Lagerdauem, in N/mm².**

| **Lagerdauer in Normklima** | **EVA-1** | **EVA-2** | **St/Ac** | **PVOH** | **Ohne P.P. ^{d)}** |
|---|---|---|---|---|---|
| 1 d | 0,20 | 0,16 | 0,17 | 0,16 | 0,26 |
| 3 d | 1,24 | 0,94 | 1,00 | 1,28 | 0,75 |
| 7 d | 5,52 | 2,37 | 3,18 | 2,99 | 1,02 |
| 14 d | 6,15 | 2,63 | 3,21 | - ^{f)} | 0,93 |
| 28 d | 5,41 | 2,44 | 2,98 | - ^{d)} | 0,77 |

Die Biegezug- und Druckfestigkeiten sind ein gutes Mass zur Beurteilung der Kohäsion des bewässerten Pflasterfugenmörtels. Die in Tabellen 3 und 4 aufgeführten Werte der verschiedenen Proben zeigen deutlich die zusätzliche Kohäsion, welche durch die Zugabe von in Wasser redispergierbaren Polymerpulver erhalten wird, im Vergleich zu derjenigen welche nur mineralisches Bindemittel enthält (gekennzeichnet mit "Ohne Polymerpulver"). Diese hohen Werte sind sehr überraschend, da der Trockenmörtel nur bewässert wurde, ohne dass anschliessend der Mörtel vermischt wurde, was einerseits die Redispersion des in Wasser redispergierbaren Polymerpulvers unterstützt, andererseits eine gute Verteilung der erhaltenen Redispersion gewährleistet. Die erhaltene Kohäsion reicht somit aus, um beispielsweise bei Schlägen oder bei der fachgerechten Reinigung mit Kehrmaschinen oder Hochdruckreinigem keine Beschädigung zu erhalten. Die ansprechenden Frühfestigkeiten ergeben dem applizierten Pflasterfugenmörtel zudem einen genügenden Schutz gegen Schlagregen und Hagel. Das eingesetzte in Wasser redispergierbare Polymerpulver gibt dem Pflasterfugenmörtel auch eine gute Flankenhaftung, so dass sich die Fuge nicht vom Pflasterstein ablöst. Der geringe Anteil an mineralischem Bindemittel gewährleistet die geforderte Flexibilität, um Deformationen beispielsweise des Untergrundes ohne Rissbildung zu überstehen. Durch gezielte Optimierung der eingesetzten Typen und Mengen von hydraulisch abbindendem Bindemittel und von in Wasser redispergierbarem Polymerpulver können zudem einfach die Flexibilität, die Biegezug- und Druckfestigkeiten wie auch die Haftzugfestigkeiten den Bedürfnissen der Anwender entsprechend optimiert werden, ohne dass die Art der Verarbeitung geändert werden muss.

### Beispiel 2: Anrühren der Pflastersteinfugenmörtel mit Wasser vor der Applikation.

Der nach Beispiel 1 hergestellte Pflasterfugentrockenmörtel wird mit der notwendigen Menge Anmachwasser eine Minute mit einem Propellerrührer bei 900 UPM angerührt, wobei die Anmachwassermenge auf die Konsistenz eingestellt wurde. Dabei wurde darauf geachtet, dass der angerührte Mörtel nicht zu dünnflüssig, aber auch nicht zu hochviskos war, sondern einfach in den nach Beispiel 1 vorbereiteten Prismenkasten mit einer Kelle eingebracht werden konnte. Zuvor wurde der angerührte Pflasterfugenmörtel jedoch noch 3 Minuten reifen gelassen und anschliessend nochmals 15 Sekunden aufgerührt. Nach dem Mörteleintrag wurde die Oberfläche des Mörtels mit einer Kelle glatt abgezogen. Die Lagerbedingungen wurden analog Beispiel 1 gehandhabt.

**Tabelle 5: Verwendete Wassermengen zur Einstellung der Konsistenz der verschiedenen Proben EVA-1, St/Ac und der Vergleichsprobe ohne Polymerpulver, sowie die Biegezug- und Druckfestigkeiten Anlehnung an EN13892-2 nach verschiedenen Lagerdauern, in N/mm².**

| **Lagerdauer in Normklima** | **Biegezugfestigkeiten [N/m2]** | | | **Druckfestigkeit [N/mm2]** | | |
|---|---|---|---|---|---|---|
| | **EVA-1** | **St/Ac** | **Ohne P.P.^{d)}** | **EVA-1** | **St/Ac** | **Ohne P.P.^{d)}** |
| Wassermenge [Gew.-%] | 9,5 | 9,5 | 15 | 9,5 | 9,5 | 15 |
| 1 d | 0,26 | 0,30 | 0,04 | 0,35 | 0,49 | 0,32 |
| 3 d | 2,13 | 2,39 | 0,30 | 4,11 | 4,75 | 0,54 |
| 7 d | 3,77 | 3,58 | 0,10 | 9,23 | 7,36 | 0,74 |

Die Resultate der Tabelle 5 zeigen, dass bei externem Anrühren des Pflasterfugentrockenmörtels und anschliessendem Eintrag in die Fugen die erhaltenen physikalischen Werte noch etwas höher sind als bei Wassereintrag über die Oberfläche gemäss Beispiel 1. Somit hat der Anwender die Wahl, mit dem gleichen Pflasterfugentrockenmörtel entweder durch den Trockeneintrag mit anschliessender Oberflächenbewässerung eine äusserst einfache und bequeme Anwendungsart zu wählen oder aber durch externes Anrühren des Pflasterfugentrockenmörtel mit Wasser und anschliessendem Eintrag noch höhere physikalische Festigkeiten zu erhalten.

## Patentansprüche

1. Verwendung von in Wasser redispergierbaren Polymerpulvern in Pflasterfugenmörteln, **dadurch gekennzeichnet, dass** der Pflasterfugenmörtel 0,5 bis 30 Gew.-%, bezogen auf den Pflasterfugentrockenmörtel, ein oder mehrere mineralische Bindemittel, 30 bis 99 Gew.-% ein oder mehrere Zuschlagstoffe, 0,5 bis 20 Gew.-% in Wasser redispergierbare Polymerpulver und 0 bis 25 Gew.-% weitere Komponenten enthält und der Pflasterfugentrockenmörtel pulverförmig in die Fuge eingebracht und anschliessend Wasser zugegeben wird oder der Pflasterfugentrockenmörtel vor dem Einbringen in eine Fuge mit Wasser vermischt und als pastöser Pflasterfugenmörtel in die Fuge eingebracht wird.

2. Verwendung nach Anspruch 1, **dadurch gekennzeichnet, dass** im Pflasterfugenmörtel, bezogen auf den Pflasterfugentrockenmörtel, der Anteil an mineralischem Bindemittel 1,0 bis 20 Gew.-%, an Zuschlagstoffen 50 bis 98 Gew.-%, an in Wasser redispergierbaren Polymerpulvern, 1,0 bis 15 Gew.-%, und an weiteren Komponenten 0 bis 20 Gew.-%, beträgt.

3. Verwendung nach Anspruch 1 oder 2, **dadurch gekennzeichnet, dass** das in Wasser redispergierbare Polymerpulver auf Basis eines oder mehrerer Emulsionspolymerisate, Suspensionspolymerisate, Microemulsionspolymerisate und/ oder inverser Emulsionspolymerisate mittels Trocknung, insbesondere mittels Sprühtrocknung, erhalten wurde.

4. Verwendung nach Anspruch 3, **dadurch gekennzeichnet, dass** das Emulsionspolymerisat, Suspensionspolymerisat, Microemulsionspolymerisat und/ oder inverse Emulsionspolymerisat mit einer oder mehreren höhermolekularen Verbindungen stabilisiert ist, insbesondere mit einem oder mehreren Schutzkolloiden, und/ oder mit einem ionischen Polymerisat, welches über radikalische (Co)Polymerisation von olefinischen Monomeren in Wasser erhalten wird, wobei zumindest ein Teil der olefinischen Monomeren eine ionische Gruppe enthält.

5. Verwendung nach mindestens einem der Ansprüche 1 bis 4, **dadurch gekennzeichnet, dass** das in Wasser redispergierbare Polymerpulver mindestens ein Polymer ist auf Basis von Vinylacetat, Ethylen-Vinylacetat, Ethylen-Vinylacetat-Vinylversatat, Ethylen-Vinylacetat-Vinylchlorid, Ethylen-Vinylchlorid, Vinylacetat-Vinylversatat, Ethylen-Vinylacetat-(Meth-)Acrylat, Vinylacetat-Vinyl-versatat-(Meth-)Acrylat, (Meth-)Acrylat, Styrol-Acrylat und/ oder Styrol-Butadien, wobei Vinylversatat ein C₄- bis C₁₂- Vinylester ist, und die Polymerisate 0 - 50 Gew.-%, insbesondere 0 - 30 Gew.-% weitere Monomere, insbesondere Monomere mit funktionellen Gruppen, enthalten können.

6. Verwendung nach mindestens einem der Ansprüche 1 bis 5, **dadurch gekennzeichnet, dass** zusätzlich mindestens eine weitere organische Komponente mit funktionellen Gruppen im in Wasser redispergierbaren Polymerpulver und/ oder im Pflasterfugentrockenmörtel enthalten ist.

7. Verwendung nach Anspruch 5 oder 6, **dadurch gekennzeichnet, dass** die funktionellen Gruppen Alkoxysilan-, Glycidyl-, Epihalohydrin-, Carboxyl-, Amin-, Hydroxyl-, Ammonium-, Keton-, Säureanhydrid-, Acetoacetonat- und/ oder Sulfonsäuregruppen darstellen.

8. Verwendung nach mindestens einem der vorhergehenden Ansprüche, **dadurch gekennzeichnet, dass** das Wasser in Form eines Sprühnebels und/ oder einer Oberflächenbewässerung zugegeben wird.

9. Verwendung nach mindestens einem der vorhergehenden Ansprüche 1 bis 7, **dadurch gekennzeichnet, dass** das Wasser mittels eines Rasensprengers, Wassersprengers, eines Gartenschlauchs mit oder ohne Verteilerdüse und/ oder einer Giesskanne zugeführt wird.

10. Verwendung nach mindestens einem der vorhergehenden Ansprüche, **dadurch gekennzeichnet, dass** als mineralisches Bindemittel mindestens a) ein hydraulisch abbindendes Bindemittel, insbesondere Zement, b) ein latent hydraulisches Bindemittel, insbesondere saure Hochofenschlacke, Puzzolane und/ oder Metakaolin, und/ oder c) ein nicht-hydraulisches Bindemittel, welches unter Einfluss von Luft und Wasser reagiert, insbesondere Calciumhydroxid und/ oder Calciumoxid, eingesetzt wird.

11. Verwendung nach mindestens einem der vorhergehenden Ansprüche, **dadurch gekennzeichnet, dass** als weitere Komponenten Farbpigmente, Celluloseether, Cellulosefasern, wasserlösliche Polymere, insbesondere Polyvinylalkohol, Verdickungsmittel, Wasserretentionsmittel, Stärkeether, Guarether, Netzmittel, Polycarboxylate, Polyacrylamide, Hydrophobierungsmittel, Luftporenbildner, Biozide, Herbizide, Fungizide, Entschäumer, Duftstoffe zum Fernhalten von Tieren, Additive zur Reduktion von Ausblühungen, der Sedimentation und/ oder des Ausschwimmens, Abbinde- und Erstarrungsbeschleuniger, Abbinde-verzögerer und/ oder Pulver, welche mit Wasser alkalisch reagieren, insbesondere Oxide und/ oder Hydroxide von Alkali- und/ oder Erdalkalisalzen, eingesetzt werden.

## Claims

1. Use of polymer powders re-dispersible in water in paving jointing mortars **characterised in that** the paving jointing mortar contains 0.5% to 30% by weight, based on the paving jointing dry mortar, of one or several mineral binders, 30 to 99% by weight of one or several additives and, 0,5 to 20% by weight of polymer powders re-dispersible in water and 0 to 25% by weight of further components and the paving jointing dry mortar is introduced into the joint in powder form and subsequently water is added or the paving jointing dry mortar is mixed with water before introduction into a joint and introduced into the joint as a paving jointing mortar in paste form.

2. Use according to claim 1 **characterised in that,** in the paving jointing mortar, the proportion, based on the paving jointing dry mortar, of mineral binder is 1.0 to 20% by weight, of additives 50 to 98% by weight, of polymer powders re-dispersible in water 1.0 to 15% by weight and of further components 0 to 20% by weight.

3. Use according to claim 1 or 2 **characterised in that** the polymer powder re-dispersible in water has been obtained on the basis of one or several emulsion polymers, suspension polymers, microemulsion polymers and/or inverse emulsion polymers by drying, in particular by spray drying.

4. Use according to claim 3 **characterised in that** the emulsion polymer, suspension polymer, micro-emulsion polymer and/or inverse emulsion polymer is stabilised with one or several high molecular compounds, in particular with one or several protective colloids and/or with an ionic polymer which is obtained via radical (co-)polymerisation of olefinic monomers in water, at least part of the olefinic monomers containing an ionic group.

5. Use according to at least one of claims 1 to 4 **characterised in that** the polymer powder re-dispersible in water is at least one polymer based on vinyl acetate, ethylene-vinyl acetate, ethylene-vinyl acetate-vinyl versatate, ethylene-vinyl acetate-vinyl chloride, ethylene-vinyl chloride, vinyl acetate-vinyl versatate, Ethylene-vinyl acetate (meth)acrylate, vinyl acetate-vinyl versatate (meth)acrylate, (meth)acrylate, styrene-acrylate and/or styrene butadiene, vinyl versatate being a C₄- to C₁₂- vinyl ester and the polymers being capable of containing 0 to 50% by weight, in particular 0 to 30% by weight of further monomers, in particular monomers with functional groups.

6. Use according to at least one of claims 1 to 5 **characterised in that,** additionally, at least one further organic component with functional groups is contained in the polymer powder re-dispersible in water and/or in the paving jointing dry mortar.

7. Use according to claim 5 or 6 **characterised in that** the functional groups represent alkoxysilane groups, glycidyl groups, epihalohydrin groups, carboxyl groups, amine groups, hydroxyl groups, ammonium groups, ketone groups, acid anhydride groups, acetoacetonate groups and/or sulphonic acid groups.

8. Use according to at least one of the preceding claims **characterised in that** the water is added in the form of a spray mist and/or surface watering.

9. Use according to at least one of the preceding claims 1 to 7 **characterised in that** the water is provided by means of a lawn sprinkler, water sprinkler, a garden hose with or without distributor nozzle and/or a watering can.

10. Use according to at least one of the preceding claims **characterised in that** at least a) a hydraulically binding binder, in particular cement, b) a latent hydraulic binder, in particular acidic blast furnace slag, pozzolans and/or metakaolin and/or c) a non-hydraulic binder which reacts under the influence of air and water, in particular calcium hydroxide and/or calcium oxide are used as mineral binders.

11. Use according to at least one of the preceding claims **characterised in that** colour pigments, cellulose ethers, cellulose fibres, water-soluble polymers, in particular polyvinyl alcohol, thickening agents, water retention agents, starch ethers, guar ethers, wetting agents, polycarboxylates, polyacrylamides, hydrophobing agents, air pocket formers, biocides, herbicides, fungicides, defoaming agents, fragrances for keeping away animals, additives for reducing efflorescence, sedimentation and/or bleeding, setting and solidification accelerators, setting retarders and/or powders which have an alkaline reaction with water, in particular oxides and/or hydroxides of alkali salts and/or alkaline earth salts are used as further components.

## Revendications

1. Utilisation de poudres de polymères redispersables dans l'eau dans des mortiers de jointoiement pour pavés, **caractérisée en ce que** le mortier de jointoiement pour pavés contient 0,5 à 30 % en poids, par rapport au mortier de jointoiement pour pavés sur base sèche, un ou plusieurs liants minéraux, 30 à 99 % en poids d'un ou plusieurs additifs, 0,5 à 20 % en poids de poudre de polymère redispersable dans l'eau et 0 à 25 % en poids d'autres composants et le mortier de jointoiement pour pavés est introduit à sec à l'état de poudre dans le joint puis de l'eau est ajoutée ou bien le mortier de jointoiement pour pavés à l'état sec est mélangé avec de l'eau avant d'être introduit dans un joint et est introduit dans le joint sous forme de mortier pâteux de jointement pour pavés.

2. Utilisation selon la revendication 1, **caractérisée en ce que,** dans le mortier de jointoiement pour pavés, par rapport au mortier de jointoiement pour pavés sur base sèche, la proportion de liant minéral est de 1,0 à 20 % en poids, la proportion d'additifs est de 50 à 98 % en poids, la proportion de poudres de polymères redispersables dans l'eau est de 1,0 à 15 % en poids et la proportion d'autres composants est de 0 à 20 % en poids.

3. Utilisation selon la revendication 1 ou 2, **caractérisée en ce que** la poudre de polymère redispersable dans l'eau à base d'un ou plusieurs produits de polymérisation en émulsion, produits de polymérisation en suspension, produits de polymérisation en microémulsion et/ou produits de polymérisation en émulsion inverse, a été obtenue par séchage, en particulier séchage par pulvérisation.

4. Utilisation selon la revendication 3, **caractérisée en ce que** le produit de polymérisation en émulsion, le produit de polymérisation en suspension, le produit de polymérisation en microémulsion et/ou le produit de polymérisation en émulsion inverse sont stabilisés avec un ou plusieurs composés de poids moléculaire élevé, en particulier avec un ou plusieurs colloïdes de protection et/ou avec un polymérisat ionique qui est obtenu par (co)polymérisation radicalaire de monomères oléfiniques dans l'eau, une partie au moins des monomères oléfiniques contenant un groupe ionique.

5. Utilisation selon au moins l'une des revendications 1 à 4, **caractérisée en ce que** la poudre de polymères redispersables dans l'eau est au moins un polymère à base d'acétate de vinyle, d'éthylène-acétate de vinyle, d'éthylène-acétate de vinyle-versatate de vinyle, d'éthylène-acétate de vinyle-chlorure de vinyle, d'éthylène-chlorure de vinyle, d'acétate de vinyle-versatate de vinyle, d'éthylène-acétate de vinyle-(méth)acrylate, d'acétate de vinyle-versatate de vinyle-(méth)acrylate, de (méth)acrylate, de styrène-acrylate et/ou de styrène-butadiène, le versatate de vinyle étant un ester de vinyle en C₄ à C₁₂ et les polymérisats pouvant contenir 0 à 50 % en poids, en particulier 0 à 30 % en poids d'autres monomères, en particulier de monomères portant des groupes fonctionnels.

6. Utilisation selon au moins l'une des revendications 1 à 5, **caractérisée en ce qu'**au moins un autre composant organique porteur de groupes fonctionnels est en outre contenu dans la poudre de polymère redispersable dans l'eau et/ou dans le mortier de jointoiement pour pavés.

7. Utilisation selon la revendication 5 ou 6, **caractérisée en ce que** les groupes fonctionnels représentent des groupes alkoxysilane, glycidyle, épihalogénhydrine, carboxyle, amino, hydroxyle, ammonium, cétone, anhydride d'acide, acétylacétonate et/ou acide sulfonique.

8. Utilisation selon au moins l'une des revendications précédentes, **caractérisée en ce que** l'eau est ajoutée sous forme d'un brouillard de pulvérisation et/ou d'un arrosage superficiel.

9. Utilisation selon au moins l'une des revendications 1 à 7, **caractérisée en ce que** l'eau est amenée au moyen d'un arroseur de pelouse, d'un arroseur projetant de l'eau, d'un tuyau d'arrosage avec ou sans buse de distribution et/ou d'un arrosoir.

10. Utilisation selon au moins l'une des revendications précédentes, **caractérisée en ce qu'**on utilise comme liant minéral au moins a) un liant à prise hydraulique, en particulier du ciment, b) un liant hydraulique latent, en particulier du laitier acide de haut fourneau, du puzzolane et/ou du métacaolin et/ou c) un liant non hydraulique qui réagit sous l'influence de l'air et de l'eau, en particulier de l'hydroxyde de calcium et/ou de l'oxyde de calcium.

11. Utilisation selon au moins l'une des revendications précédentes, **caractérisée en ce qu'**on utilise comme autres composants des pigments de couleurs, des éthers de cellulose, des fibres de cellulose, des polymères hydrosolubles, en particulier un polymère d'alcool vinylique, des agents épaississants, des agents de rétention de l'eau, des éthers d'amidon, des éthers de guar, des agents mouillants, des polycarbonates, des polyacrylamides, des agents conférant le caractère hydrophobe, des agents porogènes aérateurs, des biocides, des herbicides, des fongicides, des agents antimousse, des substances odorantes pour écarter les animaux, des additifs pour réduire les efflorescences, la sédimentation et/ou du manque d'homogénéité, des accélérateurs de prise et de solidification, des retardateurs de prise et/ou des poudres qui donnent une réaction alcaline avec l'eau, en particulier des oxydes et/ou des hydroxydes de métaux alcalins et/ou de métaux alcalinoterreux.
